(19) Europäisches Patentamt
European Patent Office
Office européen des brevets

(11) **EP 2 027 896 A1**

(12) **DEMANDE DE BREVET EUROPEEN**

(43) Date de publication:
**25.02.2009 Bulletin 2009/09**

(51) Int Cl.:
***A63F 13/00*** *(2006.01)*    *G06F 17/50* *(2006.01)*

(21) Numéro de dépôt: **07291026.8**

(22) Date de dépôt: **20.08.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK RS**

(71) Demandeurs:
• **BARRET DE NAZARIS, Lionel Bruno**
  **42370 Renaison (FR)**
• **LEGAUT, Bernard Paul Rémy**
  **69002 Lyon (FR)**
• **Centre National de la Recherche Scientifique**
  **75794 Paris Cedex 16 (FR)**
• **UNIVERSITE CLAUDE BERNARD - LYON 1**
  **69100 Villeurbanne (FR)**

(72) Inventeurs:
• **Legaut, Bernard, Paul, Rémy**
  **69002 Lyon (FR)**

• **Barret de Nazaris, Lionel, Bruno**
  **42370 Renaison (FR)**
• **Armetta Frédéric**
  **69100 Villeurbanne (FR)**
• **Brondel, Saida**
  **69001 Lyon (FR)**
• **Hassas, Salima**
  **69100 Villeurbanne (FR)**

(74) Mandataire: **Martin, Didier Roland Valéry**
  **Cabinet Didier Martin**
  **50, chemin des Verrières**
  **69260 Charbonnières-les Bains (FR)**

Remarques:
Une requête en rectification du texte dans la revendication N° 1 a été présentée conformément à la règle 139 CBE. Il sera statué sur cette requête au cours de la procédure engagée devant la division d'examen (Directives relatives à l'examen pratiqué à l'OEB, A-V, 3.).

(54) **Procédé et logiciel de simulation d'environnements citadins dynamiques modelés**

(57)    - Simulation d'environnements citadins dynamiques et procédé de fabrication afférant.
- Procédé de génération dynamique par simulation informatique d'une pluralité d'éléments spatiaux, en particulier des bâtiments et des routes, constitutifs d'un environnement citadin en trois dimensions, ledit procédé incluant un sous programme de supervision en charge du contrôle global de la simulation et un sous programme de réorganisation spatiale dépendant du sous programme de supervision et en charge de la génération à l'échelle locale de l'environnement citadin, ledit procédé comprenant :
- une étape (a) de positionnement dans la simulation d'un élément spatial,
- une étape (b) de génération par le sous programme de supervision d'au moins une requête dépendante de l'élément spatial de l'étape (b) à destination du sous programme de réorganisation spatiale,
- une étape (c) de matérialisation spatiale de la au moins une requête par le sous programme de réorganisation spatiale, lequel fait intervenir des agents,
caractérisé en ce qu'au moins une partie des agents intervenant dans le sous programme de réorganisation spatiale sont capables de négocier entre eux.

FIG.1

**Description**

La présente invention se rapporte au domaine technique général de la génération d'environnements graphiques de synthèse en trois dimensions, utilisables notamment pour les décors de jeux vidéo ou de films.

La présente invention se rapporte en particulier au domaine technique général des procédés de génération d'environnements citadins dynamiques en trois dimensions par simulation informatique.

La présente invention concerne plus particulièrement un procédé de génération dynamique par simulation informatique d'une pluralité d'éléments spatiaux, en particulier des bâtiments et des routes, constitutifs d'un environnement citadin en trois dimensions, ledit procédé incluant un sous programme de supervision en charge du contrôle global de la simulation et un sous programme de réorganisation spatiale dépendant du sous programme de supervision et en charge de la génération à l'échelle locale de l'environnement citadin, ledit procédé comprenant :

- une étape (a) de positionnement dans la simulation d'un élément spatial,
- une étape (b) de génération par le sous programme de supervision d'au moins une requête dépendante de l'élément spatial de l'étape (a) à destination du sous programme de réorganisation spatiale,
- une étape (c) de matérialisation spatiale de la au moins une requête par le sous programme de réorganisation spatiale, lequel fait intervenir des agents.

La présente invention concerne également un programme informatique comprenant un moyen de code de programme informatique adapté pour exécuter les étapes d'un procédé de génération dynamique par simulation informatique d'une pluralité d'éléments spatiaux, en particulier des bâtiments et des routes, constitutifs d'un environnement citadin en trois dimensions, lorsque ledit programme est exécuté sur un ordinateur.

La présente invention concerne également un programme informatique tel que celui précité, mis en oeuvre sur un support lisible par ordinateur.

La présente invention concerne enfin également un support pouvant être lu par un ordinateur et sur lequel est enregistré un programme informatique tel que celui précité.

La génération d'environnements citadins par simulation informatique est bien connue dans l'art antérieur. Il existe de nombreux besoins pour ce type de technologie avec le développement des jeux vidéo et des images de synthèse dans la cinématographie.

En particulier, la demande se tourne vers des environnements citadins très proches de la réalité, et simulant par exemple des villes telles qu'on les connait de nos jours.

Pour répondre à ces besoins, il est notamment connu d'utiliser un procédé de simulation informatique semi-automatique comprenant une étape préliminaire de création de spécifications.

Il s'agit notamment de données d'entrée concernant les activités qui seront présentes dans la simulation de la ville ainsi que des données sur l'environnement de la simulation (relief, étendue d'eau, bois, ...). Généralement, les simulations de l'art antérieur n'utilisent que quatre activités, savoir l'activité résidentielle, l'activité commerciale, l'activité industrielle et l'activité parc.

On connaît déjà des simulations informatiques d'environnements citadins qui font également intervenir des agents qui créent, en réponse aux spécifications, des structures, des propriétés (de type résidentiel, industriel, commercial ou parc) ainsi que des routes. Les simulations de l'art antérieur faisant intervenir des agents sont des systèmes multi-agents comprenant une pluralité d'agents disposés dans un certain environnement. L'agent est une entité virtuelle, c'est-à-dire un programme informatique, qui fonctionne au moins partiellement de manière autonome, savoir sans l'intervention permanente de l'utilisateur.

En général, la simulation de l'environnement citadin débute par la création de routes par les agents. Les structures, souvent des bâtiments, sont ensuite disposées de manière aléatoire tout en tenant compte des spécifications initiales.

Ce sont ces données d'entrée et leurs relations les unes avec les autres qui conduisent le développement de la simulation et la croissance de l'environnement citadin. Par exemple, il est bien connu dans ce type de simulation que les maisons résidentielles seront disposées plutôt dans des zones de relief plus élevé, que les parcs seront à proximité des zones résidentielles et qu'au contraire les zones industrielles privilégieront les zones de faible relief, éloignées des zones résidentielles.

Toutefois, de tels procédés, s'ils permettent d'obtenir automatiquement une simulation informatique d'un environnement citadin n'en présentent pas moins certains inconvénients.

D'une manière générale, ces procédés de l'art antérieur pour la génération d'environnements citadins ne permettent pas d'obtenir automatiquement un résultat parfaitement convenable pour l'utilisateur. Plus précisément, les résultats bruts obtenus ne sont susceptibles d'être satisfaisants qu'à l'échelle de la ville globale (c'est à dire de son plan) mais sont inadaptés pour une visite en trois dimensions par exemple.

En effet, le résultat des simulations de l'art antérieur comprend souvent un grand nombre d'erreurs ou d'incohérences, et pourrait de ce fait difficilement être extrapolable à un plan en trois dimensions réalisable dans le monde réel. A ce propos, les simulations obtenues comportent des erreurs notamment en terme de cohérence entre la ville et les bâtiments. La simulation aura par exemple tendance à générer la disposition d'un grand cinéma dans un petit espace de taille inadaptée ou d'une petite maison dans un grand espace, inadapté lui aussi. L'utilisateur doit donc sans cesse intervenir pour corriger la simulation et perd donc beaucoup de temps avec des interventions manuelles.

En d'autres termes, bien qu'ils soient revendiqués comme procédés « *automatiques* » ou « *semi-automatique* », les procédés antérieurs demandent généralement une intervention *a posteriori* de l'utilisateur récurrente et parfois fastidieuse pour obtenir un résultat réellement satisfaisant, même à petite échelle.

De surcroît, ces procédés connus et conformes à ce qui vient d'être décrit présentent notamment l'inconvénient de générer des simulations peu détaillées des environnements citadins. Ce constat est lié au nombre très faible d'activités utilisées, savoir seulement quatre activités, ce qui bien évidemment limite considérablement le niveau de détail et la variété des bâtiments générés dans la simulation.

Les procédés de l'art antérieur n'intègrent par ailleurs pas la notion d'usage de l'environnement citadin. Par exemple, des zones très peuplées ne sont pas nécessairement desservies par des axes routiers importants.

Les objets assignés à l'invention visent en conséquence à porter remède aux inconvénients énumérés précédemment et à proposer un nouveau procédé de génération d'un environnement citadin dynamique en trois dimensions par simulation informatique plus fonctionnel et permettant de limiter les interventions de l'utilisateur.

Un autre objet de l'invention vise à proposer un nouveau procédé qui permet une génération rapide et cohérente d'un environnement citadin dynamique en trois dimensions.

Un autre objet de l'invention vise en particulier à proposer un nouveau procédé de génération d'un environnement citadin dynamique en trois dimensions permettant une simulation informatique détaillée et réaliste.

Un autre objet de l'invention vise en particulier à proposer un nouveau procédé de génération d'un environnement citadin dynamique en trois dimensions permettant une subdivision logique et organisée de l'environnement citadin.

Un autre objet de l'invention vise en particulier à proposer un nouveau procédé de génération d'un environnement citadin dynamique en trois dimensions permettant une simulation informatique dynamique et évolutive.

Un autre objet de l'invention vise en particulier à proposer un nouveau procédé de génération d'un environnement citadin dynamique en trois dimensions permettant d'obtenir une génération rapide et exacte de l'environnement citadin.

Un autre objet de l'invention vise en particulier à proposer un nouveau procédé de génération d'un environnement citadin dynamique en trois dimensions permettant de transmettre les éventuelles incohérences locales au niveau global, pour correction.

Un autre objet de l'invention vise notamment à proposer un nouveau procédé de génération d'un environnement citadin dynamique en trois dimensions permettant une simulation informatique avec une réorganisation spatiale locale.

Un autre objet de l'invention vise notamment à proposer un nouveau procédé de génération d'un environnement citadin dynamique en trois dimensions par simulation informatique dans lequel il existe une gestion à la fois globale et locale de l'évolution de l'environnement citadin.

Un autre objet de l'invention vise notamment à proposer un nouveau procédé de génération par simulation informatique d'un environnement citadin dynamique en trois dimensions permettant une progression de l'environnement citadin peu limitée par le relief.

Les objets assignés à l'invention sont atteints à l'aide d'un procédé de génération dynamique par simulation informatique d'une pluralité d'éléments spatiaux, en particulier des bâtiments et des routes, constitutifs d'un environnement citadin en trois dimensions, ledit procédé incluant un sous programme de supervision en charge du contrôle global de la simulation et un sous programme de réorganisation spatiale dépendant du sous programme de supervision et en charge de la génération à l'échelle locale de l'environnement citadin, ledit procédé comprenant :

- une étape (a) de positionnement dans la simulation d'un élément spatial,

- une étape (b) de génération par le sous programme de supervision d'au moins une requête dépendante de l'élément spatial de l'étape (a) à destination du sous programme de réorganisation spatiale,

- une étape (c) de matérialisation spatiale de la au moins une requête par le sous programme de réorganisation spatiale, lequel fait intervenir des agents,

caractérisé en ce qu'au moins une partie des agents intervenant dans le sous programme de réorganisation spatiale sont capables de négocier entre eux.

Les objets assignés à l'invention sont également atteints à l'aide d'un programme informatique comprenant un moyen de code de programme informatique adapté pour exécuter les étapes d'une méthode conforme à l'invention, lorsque ledit programme est exécuté sur un ordinateur.

Les objets assignés à l'invention sont également atteints à l'aide d'un programme informatique conforme à l'invention mis en oeuvre sur un support lisible par un ordinateur.

Les objets assignés à l'invention sont également atteints à l'aide d'un support pouvant être lu par un ordinateur et sur lequel est enregistré un programme conforme à l'invention.

D'autres objets et avantages de l'invention apparaîtront plus en détails à la lecture de la description qui suit, en référence aux dessins annexés, donnés à titre purement illustratif et non limitatif, dans lesquels :

- La figure 1 représente un diagramme fonctionnel des principales étapes intervenant dans le procédé de génération dynamique par simulation informatique d'un environnement citadin en trois dimensions de l'invention.

- La figure 2 illustre schématiquement un exemple de mise en oeuvre de l'étape (b) du procédé conforme à l'invention, dans lequel une proposition est émise par un bâtiment suite à une interrogation d'ajout d'un bâtiment par le sous programme de supervision de l'invention.

- La figure 3 illustre schématiquement un exemple de mise en oeuvre de l'étape (c) du procédé conforme à l'invention, dans lequel une proposition de réorganisation spatiale émise par une cour suite à une interrogation d'ajout d'un bâtiment du sous programme de supervision de l'invention.

- La figure 4 illustre schématiquement un exemple de mise en oeuvre de l'étape (c) du procédé conforme à l'invention, dans lequel une interrogation d'ajout d'un bâtiment du sous programme de supervision de l'invention donne lieu à des négociations entre des bâtiments.

L'invention concerne un procédé de génération d'un environnement citadin dynamique en trois dimensions par une simulation informatique. Un environnement citadin au sens de l'invention est une ville ou un village ou toute autre zone façonnée par l'homme (ou toute autre créature réelle ou imaginaire dotée de capacités suffisantes à cet effet) comprenant des constructions. De préférence, il s'agit d'un espace comprenant des habitations, par exemple des habitations humaines, mais également des bâtiments représentant des activités, par exemple des activités humaines telles que l'industrie et le commerce notamment.

On entend par simulation informatique un ensemble de techniques qui permet d'imiter, aussi fidèlement que possible, un environnement citadin réel grâce à des programmes intégrant des modèles mathématiques basés sur des paramètres que l'on rencontre dans le monde réel.

Le procédé de l'invention permet une génération dynamique de l'environnement citadin, c'est-à-dire que la génération n'est pas statique ou fixée *a priori*, mais qu'elle est au contraire déterminée au fur et à mesure de l'exécution de la simulation informatique et selon le besoin de l'utilisateur. Une génération au sens de l'invention est l'action d'engendrer automatiquement des données à partir d'autres données, notamment à partir de données d'entrée telles que définies ci-après. De préférence, la génération dynamique de l'environnement citadin est automatique, c'est-à-dire qu'elle est en partie autonome et ne nécessite pas une intervention humaine permanente.

L'environnement citadin tel qu'on l'a défini précédemment intègre une pluralité d'éléments spatiaux. Il s'agit en particulier de bâtiments et de routes ou de tout autre objet urbain. Au sens de bâtiment, on entend tout objet urbain occupant de façon permanente une parcelle de terrain. A ce titre, une statue, un arbre, un parc est un bâtiment au sens de l'invention, au même titre bien entendu que les constructions comprenant au moins un mur et un toit, telles que les maisons, immeubles d'habitation, usines, commerces, églises ou autres. Les routes au sens de l'invention sont de préférence des routes telles qu'on peut les rencontrer dans le monde réel, savoir des routes de tailles variées. Les routes de l'invention peuvent notamment être des routes avec une ou plusieurs voies de circulation, à sens unique ou à double sens, des autoroutes, des périphériques, des rocades, des nationales, des départementales, des chemins, des voies express et/ou des voies rapides. Le terme « *route* » englobe également les routes de conception imaginaire, sans équivalent dans le monde réel.

L'environnement citadin de l'invention est en trois dimensions, c'est-à-dire qu'il rend compte des volumes et des tailles des différents éléments spatiaux le constituant.

Dans le procédé de l'invention, il existe un sous programme de supervision en charge du contrôle global de la simulation. De manière avantageuse, ce sous programme permet la surveillance de l'évolution de la simulation. En particulier, il a une vision globale peu détaillée de l'environnement citadin créé et a pour objectif principal de permettre l'obtention d'un environnement citadin cohérent. En effet, le sous programme de supervision peut de préférence surveiller l'évolution de la génération de l'environnement citadin dans son ensemble, mais ne peut pas visualiser le détail de ce qui se passe localement.

A ce propos, le procédé de l'invention comprend par conséquent également un sous programme de réorganisation spatiale dépendant du sous programme de supervision et en charge de la génération à l'échelle locale de l'environnement citadin. Ce sous programme permet une réorganisation spatiale, savoir l'obtention à l'échelle locale du meilleur agencement spatial possible entre les éléments spatiaux afin de répondre à l'objectif principal de cohérence de l'environnement citadin. Au sens de l'invention, un environnement citadin cohérent est préférentiellement un environnement citadin ne comprenant que peu ou pas d'erreurs de simulation, savoir par exemple des erreurs de positionnement ou d'usage, et qui est très proche des environnements citadins tels qu'on les rencontre dans le monde réel.

Le procédé de l'invention comprend plusieurs étapes qui font intervenir les deux sous programmes définis ci-avant ainsi que les interactions pouvant exister entre les deux. De préférence, au cours d'une sous-étape ($a_0$), une pluralité de spécifications sont fournies pour servir de données d'entrée à la simulation, lesdites spécifications comprenant au moins une activité, de préférence une pluralité d'activités, et une carte d'un monde en relief.

La sous-étape ($a_0$) de création d'une pluralité de spécifications servant de données d'entrée à la simulation intervient avant le début de la simulation informatique. Au sens de l'invention, les spécifications sont des informations que l'utilisateur renseigne avant de débuter la simulation. De manière préférentielle, les spécifications mises en oeuvre dans la sous-étape ($a_0$) sont des données concernant le relief sur lequel l'environnement citadin sera généré et concernant les activités, par exemple humaines, que l'utilisateur souhaite voir apparaitre dans la simulation. De préférence, on entend par « *relief* » l'environnement en général, savoir tout ce qui n'est pas la ville (sol brut, forêts, étendues d'eau, etc.).

Au sens de l'invention, le terme « *activités* » concerne toutes les fonctions que peuvent remplir les bâtiments et les constructions de l'invention.

De manière préférentielle, il s'agit des activités de commerce (épicerie, boulangerie, grande surface, restaurant, hôtel ...), des activités industrielles (zones industrielles, usines de sidérurgie, usines de textile ...), des activités scolaires (écoles primaires, collèges, lycées, universités ...), des activités de logement (résidences, pavillons, maisons individuelles, lotissements, immeubles ...), des activités administratives (mairies, préfectures, ministère ...), des activités sportives (complexes sportifs, piscines municipales, gymnases, terrains de sport, tennis ...), des activités de loisirs (parcs, zoo, cinéma ...) et/ou des activités religieuses (église, cathédrale ...), cette liste n'étant bien entendu pas limitative et tout autre activité, même imaginaire, pouvant être envisagée.

Avantageusement, les activités de la sous-étape ($a_0$) sont en interaction les unes avec les autres. En effet, de préférence chaque activité peut interagir avec une ou plusieurs autres activités. De manière préférentielle, le positionnement d'un élément spatial dans la simulation a tendance, selon l'activité qui lui est associée, à être attractif ou répulsif pour d'autres activités.

Le positionnement dans l'environnement citadin de l'invention d'un cinéma, représentant une activité de loisir, aura tendance par exemple à attirer une activité de commerce, se matérialisant notamment sous forme de restaurants ou de bars. De même, à titre illustratif, la génération d'une université aura tendance à attirer des logements étudiants à proximité dans l'environnement citadin en évolution.

Préférentiellement, les activités peuvent donc interagir entre elles en s'attirant ou en se repoussant. L'activité école aura tendance par exemple à attirer l'activité logement, alors qu'au contraire l'activité industrielle aura tendance à être répulsive pour l'activité logement. Les activités ont pour principale fonction d'augmenter les possibilités de simulation et d'améliorer très nettement le niveau de détails de l'environnement citadin.

Une fois les spécifications entrées dans le programme par l'utilisateur, la simulation peut débuter. Le procédé comprend alors une étape (a) de positionnement, par exemple aléatoire, dans la simulation d'un élément spatial, répondant aux spécifications créées à la sous-étape ($a_0$). De préférence, l'élément spatial est un bâtiment relevant d'une activité tel que défini ci-avant.

De manière préférée, l'élément spatial créé au cours de l'étape (a) est un agent en trois dimensions. Au sens de l'invention, l'agent est une entité virtuelle, c'est-à-dire un programme informatique, qui fonctionne au moins partiellement de manière autonome, savoir sans l'intervention permanente de l'utilisateur. En outre, selon l'invention, un agent possède de manière préférentielle au moins un objectif personnel, savoir au moins une contrainte liée à la fonction à laquelle il est associé, ladite au moins une contrainte l'empêchant de pouvoir subir des réorganisations spatiales incohérentes. De manière préférentielle, un agent au sens de l'invention a des objectifs personnels dépendant de l'activité à laquelle il est lié.

Préférentiellement, les agents perçoivent leur environnement proche, c'est-à-dire qu'ils sont capables de ressentir les éléments proches qui les entourent.

De préférence, les agents de la simulation de l'invention perçoivent un espace restreint et peuvent interagir au minimum dans l'espace restreint où ils sont positionnés ou au maximum dans l'ensemble de l'environnement citadin. Avantageusement, un agent a au moins un objectif personnel et sa perception se limite à un espace déterminé.

L'environnement citadin est préférentiellement subdivisé en îlots. De préférence, le premier élément spatial se positionne dans un premier îlot. Au sens de l'invention, un îlot correspond à une zone délimitée de l'espace, savoir un espace restreint se trouvant délimité par des routes sur lequel on positionne des bâtiments. Bien évidemment et de manière avantageuse, la taille et la forme des îlots de l'environnement citadin généré est variable. Avantageusement, le découpage de l'environnement citadin à l'aide des îlots permet de quadriller l'espace de la simulation informatique et de créer une unité spatiale de base à l'environnement citadin. Bien entendu, l'environnement citadin n'est pas *a priori* divisé en îlots, ces derniers se formant au fur et à mesure de la création de la ville. Ainsi les routes se construisent et au bout d'un certain temps elles se croisent pour former des îlots, lesquels peuvent donc être ouverts ou fermés.

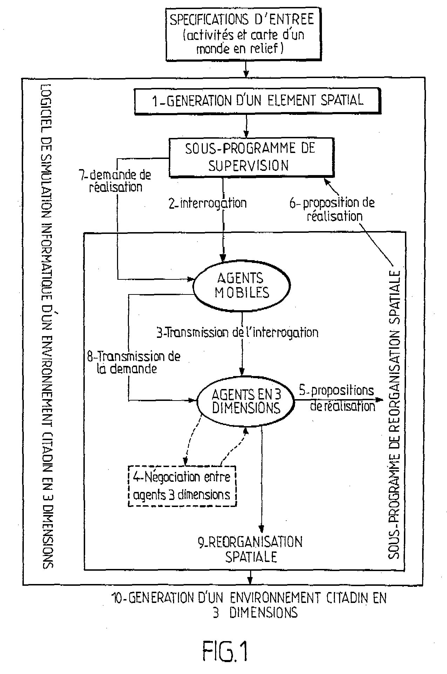

Le procédé comprend ensuite une étape (b) de génération par le sous programme de supervision d'au moins une requête dépendante de l'élément spatial de l'étape (a) à destination du sous programme de réorganisation spatiale. Lors de cette étape et au vue de l'élément spatial disposé, comme cela est schématisé à la figure 1, le sous programme de supervision va émettre au moins une requête qui prend la forme d'une interrogation concernant l'évolution de la génération de l'environnement citadin, au sous programme de réorganisation spatiale. L'élément spatial généré appartient préférentiellement à une activité définie dans les spécifications. L'évolution de l'environnement citadin se fera donc en fonction de cette activité et du type d'élément spatial créé (maison, école ...).

De manière préférentielle, le sous programme de supervision mis en oeuvre dans l'étape (b) exerce un contrôle central sur la simulation et émet au moins une requête pour l'évolution de l'environnement citadin.

La requête qui a préférentiellement la forme d'une interrogation peut porter par exemple sur l'ajout d'une route ou d'un bâtiment, appliqué à un ou plusieurs îlots. De manière préférentielle, l'interrogation fournit différentes informations :

- Un type d'objet à placer dont on peut déduire certaines caractéristiques et des objectifs supplémentaires facultatifs locaux. Par exemple, un commerce doit être positionné en bord de route sur au moins 5 mètres ou la route scinde l'îlot entre deux positions précises,

- Une pondération représentative de l'intérêt du placement. A ce titre, un poids est associé au positionnement de l'objet et mis en rapport avec un coût de la réorganisation spatiale qu'il provoque, ledit coût de la réorganisation spatiale comprenant notamment des coûts d'aménagement des bâtiments ou des routes affectées.

L'interrogation est à destination du sous programme de réorganisation. Une fois ladite au moins une requête émise par le sous programme de supervision, le procédé fait intervenir une étape (c) de matérialisation spatiale de la au moins une requête par le sous programme de réorganisation spatiale, lequel fait intervenir les agents.

De manière préférée, les agents intervenant dans l'étape (c) sont des agents mobiles et des agents statiques. Les agents sont préférentiellement des entités virtuelles telles que définies ci-avant, à savoir des unités autonomes permettant la génération d'un environnement citadin cohérent.

Avantageusement, les agents mobiles se déplacent dans l'environnement citadin et ont pour objectif principal la construction d'un réseau de transport cohérent. Cet objectif principal permet une évolution logique et réaliste de la simulation informatique, de préférence en construisant des routes entre les bâtiments.

Les agents mobiles peuvent préférentiellement interagir directement avec le sous programme de supervision, de préférence en émettant des propositions. De manière avantageuse, ils sont les navigateurs du système et transmettent les informations sur l'environnement citadin au sous programme de supervision. Ils vont par exemple signaler au sous programme de supervision qu'une route n'est plus utilisée ou qu'un bâtiment devrait être détruit. Les agents mobiles vont proposer de manière préférentielle au sous programme de supervision des besoins ou des envies pour l'environnement citadin en évolution. De manière avantageuse, à partir de ces propositions, le sous programme de supervision va les analyser et émettre ou non des interrogations liées à ces propositions.

De préférence, la décision finale est prise par le sous programme de supervision qui demande à au moins un agent mobile la réalisation d'une interrogation.

Préférentiellement, les agents mobiles sont les messagers de la réorganisation spatiale en formulant localement la au moins une requête émise par le sous programme de supervision dans l'étape (b).

De préférence, au moins un agent mobile reçoit une interrogation de la part du sous programme de supervision, par exemple une demande de construction d'un cinéma dans un îlot en particulier. De manière avantageuse, ledit au moins un agent mobile transmet l'interrogation au niveau local de l'environnement citadin, savoir au processus de réorganisation, de manière préférée au niveau de l'îlot. De préférence, ledit au moins un agent mobile appartient au sous programme de réorganisation spatiale, peut être l'initiateur de la réorganisation spatiale mais ne subit pas lui-même la réorganisation spatiale.

De manière préférentielle, les agents mobiles sont une interface entre le sous programme de supervision et le sous programme de réorganisation.

De manière avantageuse, l'objectif de l'étape (d) de réorganisation spatiale est de concrétiser ladite au moins une requête au niveau spatial dans l'environnement citadin.

Le sous programme de réorganisation spatiale émet de préférence une proposition au sous programme de supervision, en vue notamment de permettre le meilleur agencement spatial pour l'élément spatial contenu dans la requête.

Pour émettre sa proposition au sous programme de supervision, le sous programme de réorganisation spatiale utilise préférentiellement des agents statiques tel que cela est illustré à la figure 1. De manière avantageuse, les agents statiques sont des agents en trois dimensions capables de négocier entre eux. De préférence, ces agents en trois dimensions sont définis de manière identique à l'élément spatial de l'étape (a), savoir ce sont de préférence des bâtiments et/ou des routes disposées autour et dans les îlots de l'environnement citadin.

De préférence, les agents en trois dimensions de l'invention ont des objectifs personnels dépendants de la nature desdits agents, savoir dépendants de l'activité à laquelle ils sont associés. Par exemple, un agent de type cinéma a des objectifs propres l'empêchant de se positionner dans un îlot de taille trop petite par rapport à la taille minimale d'un cinéma. L'agent au sens de l'invention a des objectifs.

Alternativement et sans sortir du cadre de l'invention, l'agent en trois dimensions est une construction comme par exemple un immeuble, un pont, une église, une maison d'habitation, un cinéma, un complexe sportif, une route ... ou tout autre objet urbain tel que défini ci-avant (statue, arbre, parc ...).

Avantageusement, les agents en trois dimensions de la présente invention sont capables de négocier entre eux, c'est-à-dire qu'ils peuvent interagir et communiquer les uns avec les autres. De préférence, la négociation entre agents trois dimensions n'intervient qu'à l'échelle de l'îlot, c'est-à-dire que les agents en trois dimensions d'un même îlot tel que défini ci-avant interagissent entre eux selon l'interrogation émise par le sous programme de supervision et transmise par ledit au moins un agent mobile.

Au sens de l'invention, la négociation est en quelque sorte un échange d'informations, une discussion ou tout autre interaction entre les agents en trois dimensions dans le but de convenir entre agents en trois dimensions d'une réorganisation spatiale la plus appropriée à l'interrogation reçue. La négociation entre agents trois dimensions intervient préférentiellement sur leur forme, leurs dimensions et leur placement, en fonction notamment de l'activité à laquelle ils sont associés et de leurs objectifs propres.

La négociation entre les agents en trois dimensions d'un îlot se fait avantageusement en vue d'aboutir à une proposition cohérente pour tous les agents de l'îlot et pour l'évolution de l'environnement citadin dans sa globalité. En d'autres termes, selon les objectifs propres de chaque agent et selon l'interrogation émise, la négociation pourra aboutir à une réorganisation spatiale plus ou moins importante. De manière préférentielle, chaque agent en trois dimensions a au moins un objectif personnel et sa perception se limite à son environnement proche, de préférence à l'îlot dans lequel il est situé.

Cette négociation est particulièrement intéressante car elle permet d'éviter les erreurs présentes dans les simulations de l'art antérieur. En effet, la réorganisation spatiale de l'invention tient de préférence compte des objectifs locaux et de l'évolution globale de l'environnement citadin. La capacité de négociation conférée aux agents permet en particulier une cohérence entre d'une part la taille et la forme de la parcelle et d'autre part le type de bâtiment qui va s'installer sur la parcelle en question. Par exemple et de préférence, les bâtiments (qui sont donc en l'espèce des agents) ont la capacité de négocier entre eux pour obtenir une parcelle correspondant à leur besoin (par exemple : grande parcelle pour un cinéma).

De manière préférentielle, un critère de valeur intervient également dans la négociation. Chaque agent en trois dimensions a une valeur de départ qui dépend principalement de sa fonction et cette valeur de l'agent en trois dimensions peut évoluer, de préférence en fonction de sa durée dans la simulation et des différentes négociations auxquelles il participe. Ainsi, de manière avantageuse, les agents n'ont pas la même valeur et les négociations sont donc influencées par ces valeurs.

Par exemple, si le sous programme de supervision demande la création d'un commerce dans un îlot où il y a une église et des maisons d'habitation, les agents en trois dimensions que sont les maisons, l'église et le commerce vont débuter une négociation pour déterminer quelle peut être la meilleure réorganisation spatiale. Des maisons anciennes dans la simulation ont plus de valeur dans l'environnement citadin par rapport à des maisons récemment disposées dans l'environnement citadin. De même, l'église a une fonction lui conférant une valeur nettement supérieure aux maisons d'habitation présentes et au commerce voulant s'installer. Il est d'ailleurs très peu probable dans cet exemple que l'église soit détruite au profit du commerce.

Chaque bâtiment est capable d'émettre une proposition de réorganisation spatiale en fonction de l'interrogation reçue et de ses objectifs personnels, dans un contexte donné.

On distingue deux cas :

- Lorsqu'un bâtiment $b \in B$ est à l'initiative de la réorganisation, il considère simplement le contexte de l'environnement courant $c \in C$, à la position indiquée par le processus de supervision.

$$F_{proposition} (b|b \in B , c|c \in C) \in P^b$$

- Lorsqu'un bâtiment subit la réorganisation, il doit considérer pour émettre une proposition que certaines parties de son environnement ne peuvent pas être remises en cause $p \in P$ :

$$F_{proposition}\ (b|b{\in}B\ ,\ c|c{\in}C\ ,\ p|p{\in}P)\ {\in}P^b$$

$F_{proposition}$ est une fonction non déterministe, c'est-à-dire que différentes exécutions pourront donner des propositions différentes. En d'autres termes, la fonction de proposition peut préférentiellement donner des propositions différentes dans un contexte identique avec une interrogation identique. De préférence, un agent en trois dimensions peut faire appel à plusieurs reprises à cette fonction afin d'établir une liste de propositions.

On peut connaître la satisfaction d'un bâtiment pour une proposition par la fonction suivante :

$$Ponderation\ (p|p{\in}Pb)\ {\in}\mathbb{R}$$

Préférentiellement, la négociation entre agents trois dimensions conduit le sous programme de réorganisation spatiale à émettre au moins une proposition de réalisation au sous programme de supervision, ladite proposition rendant compte des négociations locales des agents trois dimensions pour la au moins une requête émise par le sous programme de supervision pour l'évolution de l'environnement citadin. Cette négociation à l'échelle locale entre agents a une fonction particulière de permettre une réorganisation spatiale locale la plus appropriée à l'objectif global d'évolution de l'environnement citadin.

De préférence, la proposition émise par le sous programme de réorganisation spatiale au sous programme de supervision peut varier selon les négociations entre les agents en trois dimensions concernés. Préférentiellement, le sous programme de réorganisation spatiale peut accepter l'interrogation et proposer une réalisation, peut donner les effets collatéraux liés à une interrogation ou peut refuser de réaliser l'interrogation.

De manière avantageuse, toutes les interrogations émises par le sous programme de supervision n'aboutissent pas toutes à une matérialisation spatiale dans l'environnement citadin. En effet, si la négociation entre agents concernés par l'interrogation propose par exemple de ne pas ajouter un nouveau commerce dans un îlot, le sous programme de réorganisation spatiale transmet cette réponse au sous programme de supervision qui prend la décision finale. Devant une réponse négative de la part du sous programme de réorganisation spatiale, il est peut probable que le sous programme de supervision impose cette réorganisation.

De manière avantageuse, les étapes (a), (b) et (c) sont répétées autant que nécessaire pendant la simulation informatique en vue de générer un environnement citadin. La répétition de ces étapes du procédé permet de préférence une croissance dynamique des agents de l'environnement citadin, et par conséquent la croissance de l'environnement citadin lui-même.

De manière préférentielle, à chaque fois que l'utilisateur relance la simulation informatique en conservant les mêmes spécifications d'entrée, l'environnement citadin généré est différent. La simulation informatique au sens de l'invention comprend donc, de préférence, un caractère aléatoire.

EXEMPLES

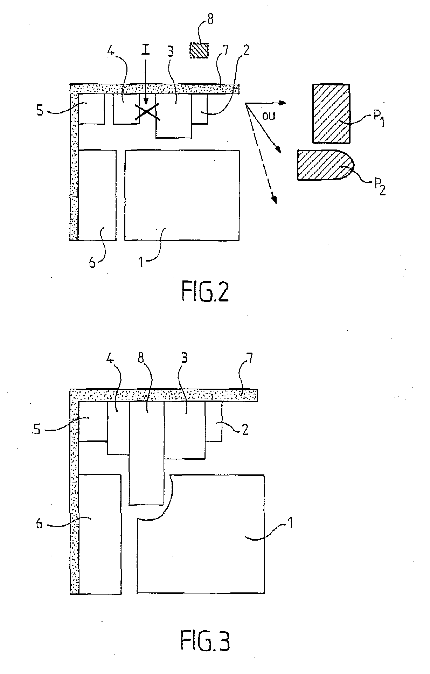

Le sous programme de supervision émet une interrogation I au niveau de l'îlot illustré dans la figure 2. Il requiert la construction d'un nouveau bâtiment 8 entre deux bâtiments 3, 4 déjà existants de l'îlot.

Les agents en trois dimensions, savoir les bâtiments 2, 3, 4, 5, la route 7, la cour 1 et le bâtiment 8 qui souhaite s'installer dans l'îlot, doivent négocier entre eux avant de pouvoir émettre des propositions de réorganisation spatiale. Le nouveau bâtiment 8 devant s'installer propose de s'insérer dans l'environnement citadin sous la forme $P_1$ ou $P_2$, telle qu'illustrée à la figure 2.

De préférence, les fonctions de proposition peuvent s'avérer plus ou moins complexes, c'est-à-dire qu'elles peuvent être simples dans un premier temps (motifs statiques à proposer) et plus évoluées par la suite (paramètres supplémentaires pour le rendu réaliste de l'environnement citadin, etc.).

Avantageusement, le sous programme de réorganisation spatiale n'est pas modifié lorsque les fonctions de proposition évoluent.

Selon la proposition $P_1$ ou $P_2$ du bâtiment 8, de la fonction et de la valeur de la cour 1, ladite cour 1 émet la proposition de réorganisation spatiale illustrée à la figure 3.

Les zones comprises entre les bâtiments, par exemple entre les bâtiments 5 et 6, qui ne sont pas des routes jouent le rôle de tampon et n'interviennent pas directement dans le sous programme de réorganisation spatiale.

Avantageusement, un moteur géographique sert à calculer les zones de chevauchement lors de la propagation d'une réorganisation spatiale. Ledit moteur géographique peut également être utilisé au sein des fonctions de proposition, comme par exemple au sein de la fonction de déformation ou de la fonction de décalage.

D'une manière générale, le sous programme de réorganisation spatiale fait préférentiellement intervenir plusieurs étapes pour une évaluation et une validation de la réorganisation spatiale d'au moins un bâtiment.

Dans une première étape, un réseau de réorganisation spatiale permettant préférentiellement de mettre en relation différentes propositions exprimées localement est généré. En outre, ledit réseau de réorganisation spatiale est capable de percevoir de manière avantageuse la meilleure réorganisation spatiale disponible parmi celles exprimées par des agents en trois dimensions concernés.

L'élaboration dudit réseau de réorganisation spatiale est décrite, en pseudo-code, par la fonction synthétique suivante :

```
Fonction Réseau GénérationRéseau (b|b∈B)

        File file = File(b)

        Réseau reseau

        Tant que (!estVide(file))

        {

                Liste listeProp = getProposition(get(file)) // récupération des
                propositions de l'agent

                pour tout pi dans listeProp

                        {

                                ajoutNoeudProposition(reseau, pi ) // construction
                                du réseau

                                Liste listeAgentImpact = getImpact(pi ) //
                                récupération des agents

                                // concernés par la proposition (grace au moteur
                                géographique)

                                ajoutFile(file, listeAgentImpact) // chaque agent
                                doit proposer une // adaptation à la perturbation

                        }
                retourner reseau

        }
```

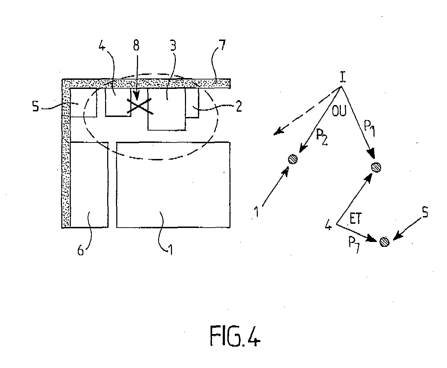

Un graphe se forme préférentiellement dès qu'un bâtiment (ou qu'une route) intervient dans des branches distinctes au cours de la génération du réseau de réorganisation spatiale. De manière avantageuse, il convient alors de garantir que les propositions exprimées ne sont pas contradictoires entre elles, notamment si elles appartiennent au même « motif de résolution », c'est-à-dire si elles possèdent un père commun de type noeuds ET, comme cela est illustré à la figure 4. De manière préférentielle, la fonction $F_{proposition}$ considère ensuite plusieurs contraintes pour émettre sa proposition.

De préférence, une deuxième étape pour une évaluation et une validation de la réorganisation spatiale d'au moins un bâtiment intervient. Il s'agit préférentiellement d'une étape de perception de la réorganisation spatiale la plus intéressante.

Le réseau, tel que décrit ci-avant, permet d'exprimer plusieurs alternatives (noeud OU) et des alternatives composées (noeud ET). De préférence, la meilleure pondération et la somme des pondérations se propagent au sein du réseau de réorganisation afin d'exprimer fidèlement le coût de réorganisation.

Préférentiellement, au cours de la réorganisation spatiale, on mémorise un sous-arbre (ou sous-réseau) le plus avantageux pour la réorganisation spatiale. Sur la figure 4, lorsque l'agent 8 propage la perception sur l'agent 4, l'agent 4 doit lui-même percevoir (vers l'agent 5) avant de transmettre sa propre réponse. En effet, l'agent 4 va transmettre une satisfaction qui dépend de sa propre satisfaction ainsi que de celle de l'agent 5, les fonctions de composition étant à définir. Au sens de l'invention, le terme « *satisfaction* » correspond à une perception par l'agent d'un état lui permettant d'approcher au mieux de ses objectifs propres tout en tenant compte au mieux des objectifs globaux de l'environnement citadin.

De manière avantageuse, une route peut être vue comme un agent qui émet des propositions (calculées suivant ses propres objectifs), et qui perçoit les objectifs locaux de l'environnement qu'elle perturbe, de préférence de l'îlot ou des îlots qu'elle délimite. Un îlot pourra exprimer sa capacité de réorganisation spatiale, notamment au niveau de sa surface minimale et de sa surface maximale, suivant le même procédé que celui des bâtiments affectés. De préférence, plusieurs architectures de réseau peuvent en conséquence être envisagées.

Alternativement, sans pour autant que l'on sorte du cadre de l'invention, il est possible d'envisager une négociation entre maisons au sein d'un demi-plan ou au sein d'un groupe de maisons. Suivant le processus décrit, on ne fait pas de distinction entre un demi-plan et un groupe de maisons, la réorganisation spatiale se mettant en place de préférence de la même manière dans les deux situations.

De manière avantageuse lors de l'évolution de l'environnement citadin, des routes et des maisons sont amenées à négocier entre elles. A titre illustratif, lorsqu'une route souhaite s'installer, elle émet des propositions de trajet. Le coût de chaque proposition de trajet sera calculé grâce aux propositions de réorganisation spatiales émises par les maisons y répondant. Avantageusement, le réseau de réorganisation spatiale permet de percevoir le coût de réorganisation spatiale le plus faible. Préférentiellement, ce coût de réorganisation spatiale est mis en rapport avec l'intérêt qu'a la route à se placer afin de déduire la réalisation ou non de la proposition de trajet.

De manière préférentielle, la réorganisation spatiale modifie au moins une partie du relief du monde en relief sur lequel est généré l'environnement citadin, tel que défini ci-avant. Avantageusement, il existe une double relation entre les agents et le relief :

- Le relief peut affecter le placement d'un agent en trois dimensions (un port s'installe par exemple de préférence vers la mer, une scierie a tendance à se positionner vers une forêt,...),

- L'agent en trois dimensions peut affecter le relief (une scierie utilise du bois et a tendance à faire reculer la forêt, une maison peut aplanir le sol avant de s'installer, ...).

De manière préférentielle, cette double relation entre les agents et le relief a pour principale fonction de contribuer à la génération d'un environnement citadin cohérent.

Avantageusement, il peut y avoir une négociation entre une route et un relief. Par exemple, dans le cas où le relief est trop pentu, la route passe ailleurs ou la route modifie le relief dans une certaine mesure. Lorsque la route émet une proposition, c'est elle qui atteste individuellement de la faisabilité de la route sur les trajets qu'elle propose.

De préférence, lors de l'évolution de l'environnement citadin, il est possible que des îlots se divisent. Avantageusement, lorsque la densité des bâtiments d'une ville augmente, c'est-à-dire notamment quand la croissance des agents augmente, un îlot situé en centre-ville peut se diviser en deux. Dans le cas où la densité des constructions continue à augmenter et en-dessous d'une certaine taille, l'îlot ne peut plus se diviser et les bâtiments deviennent des immeubles, la croissance étant de préférence verticale par empilement.

De manière avantageuse, les îlots se divisent lorsque le sous programme de supervision en fait la demande en proposant par exemple le positionnement d'une route.

De manière préférentielle, il est également envisageable d'obtenir une division des îlots dans le cas où les îlots connaissent leurs propres objectifs (taille, cohérence économique...etc.), ces objectifs pouvant évoluer au cours de la simulation. On peut imaginer qu'un îlot puisse émettre une proposition pour se diviser en deux parties dans le cas où une division lui permettrait d'améliorer sa satisfaction. Là encore, l'îlot confronte ses objectifs individuels à la configuration globale de l'environnement citadin en cours de génération.

De manière préférentielle, le procédé de l'invention permet la génération d'un environnement cohérent, par exemple réaliste et proche de la réalité, notamment du fait de la négociation entre les agents en trois dimensions qui limite considérablement les erreurs, et les interventions humaines répétées de l'art antérieur. Les agents en trois dimensions de l'invention, de préférence toutes les constructions, se positionnent préférentiellement de manière précise et exacte dans l'environnement citadin, ce qui n'était pas le cas dans les procédés de l'art antérieur.

A tout moment, l'utilisateur peut décider préférentiellement d'arrêter la simulation informatique. Dans ce cas, la génération de l'environnement citadin est stoppée et l'utilisateur peut décider de faire préférentiellement des manipulations manuelles. Par exemple, à la différence des simulations de l'art antérieur qui donnaient des résultats peu éditables, le procédé de l'invention permet de modifier des sous parties à la fin de la simulation ou de mettre la simulation en pause pour réaliser des modifications.

De manière préférentielle, l'utilisateur peut dès qu'il le souhaite éditer à la main un résultat de la simulation ou peut relancer la simulation manuellement. L'utilisateur peut également avantageusement couper ou ajouter des éléments, de manière manuelle, lorsque l'environnement citadin est en cours de génération. Après l'ajout ou la suppression, il peut également choisir de relancer préférentiellement la simulation informatique de l'invention, savoir une génération dynamique d'un environnement citadin sans intervention de l'utilisateur.

Dans le procédé de l'invention, l'utilisateur peut également de manière avantageuse ajouter des contraintes par rapport aux spécifications de départ. L'ajout de certaines contraintes conduit préférentiellement à une évolution différente de l'environnement citadin.

Avantageusement, la présente invention concerne également un programme informatique comprenant un moyen de code de programme informatique adapté pour exécuter les étapes d'un procédé conforme à ce qui vient d'être décrit lorsque ledit programme est exécuté sur un ordinateur.

De préférence, un programme informatique est une suite d'instructions écrites sous une forme que l'ordinateur peut comprendre pour traiter un problème ou pour effectuer une tâche.

De préférence, le programme informatique tel que défini ci-avant est mis en oeuvre sur un support lisible par un ordinateur. Au sens de l'invention, le terme « *support* » correspond de préférence à un élément informatique destiné à recevoir le programme informatique adapté pour exécuter le procédé de l'invention. De manière avantageuse, un support est un disque dur interne ou externe, une carte mère, un CD-Rom, une disquette, un DVD, une clé USB, une carte SIM de téléphone portable, un GPS...etc.

De manière préférentielle, la présente invention concerne en outre un support pouvant être lu par un ordinateur et sur lequel est enregistré un programme tel que défini ci-avant. Avantageusement, le support est le même que celui défini ci-avant.

Le procédé de l'invention présente de nombreux avantages par rapport à l'art antérieur. Il permet notamment d'obtenir un environnement citadin contenant peu voire pas d'erreurs de positionnement des éléments spatiaux, tels notamment les routes et les bâtiments.

En outre, le procédé de l'invention permet de positionner de manière exacte, précise et reproductible les éléments spatiaux, du fait notamment de l'interaction permanente entre les agents mais également entre les sous programmes de supervision et de réorganisation spatiale. Les interactions entre agents et entre sous programmes permettent d'obtenir la réorganisation spatiale la mieux adaptée à l'environnement citadin, tout en limitant les interventions humaines et les erreurs de maquettisme humain.

Par ailleurs, du fait de l'utilisation d'un grand nombre d'activités et de l'interaction entre ces activités, l'environnement citadin généré par le procédé de l'invention est très détaillé et comprend une grande variété d'éléments spatiaux. Cet avantage permet également d'obtenir un environnement citadin particulièrement réaliste et détaillé, ce qui ne se rencontre pas dans les environnements citadins de l'art antérieur.

De surcroît, le procédé de la présente invention permet une grande cohérence entre les bâtiments et la ville, grâce à la négociation entre les bâtiments avant la réorganisation spatiale. Cette mesure technique permet d'obtenir un environnement citadin proche de la réalité et pouvant être utilisé tel quel dans de nombreuses applications.

Il est notamment envisageable d'utiliser le résultat de la simulation informatique telle que définie dans la présente invention pour les décors virtuels des jeux vidéos. L'environnement citadin généré par le procédé de l'invention pourra également être utilisé pour les décors de synthèse des films.

Alternativement, l'environnement citadin de l'invention peut être utilisé dans toutes les applications nécessitant un environnement citadin réaliste ou imaginaire et dynamique (jeux vidéo, cinématographie, urbanisme, maquettisme, cartographie, ....).

**Revendications**

1. Procédé de génération dynamique par simulation informatique d'une pluralité d'éléments spatiaux, en particulier des bâtiments et des routes, constitutifs d'un environnement citadin en trois dimensions, ledit procédé incluant un sous programme de supervision en charge du contrôle global de la simulation et un sous programme de réorganisation spatiale dépendant du sous programme de supervision et en charge de la génération à l'échelle locale de l'environnement citadin, ledit procédé comprenant :

   - une étape (a) de positionnement dans la simulation d'un élément spatial,
   - une étape (b) de génération par le sous programme de supervision d'au moins une requête dépendante de l'élément spatial de l'étape (b) à destination du sous programme de réorganisation spatiale,
   - une étape (c) de matérialisation spatiale de la au moins une requête par le sous programme de réorganisation spatiale, lequel fait intervenir des agents,

**caractérisé en ce qu'**au moins une partie des agents intervenant dans le sous programme de réorganisation spatiale sont capables de négocier entre eux.

2. Procédé selon la revendication 1 **caractérisé en ce qu'**au cours d'une sous-étape ($a_0$) une pluralité de spécifications sont fournies pour servir de données d'entrée à la simulation, lesdites spécifications comprenant au moins une activité, de préférence une pluralité d'activités, et une carte d'un monde en relief.

3. Procédé selon la revendication 2 **caractérisé en ce que** les activités de la sous-étape ($a_0$) sont en interaction les unes avec les autres.

4. Procédé selon la revendication 1 **caractérisé en ce que** l'environnement citadin est subdivisé en îlots.

5. Procédé selon la revendication 1 **caractérisé en ce que** l'élément spatial créé au cours de l'étape (a) est un agent en trois dimensions.

6. Procédé selon la revendication 1 **caractérisé en ce que** les agents intervenant dans l'étape (c) sont des agents mobiles et des agents statiques.

7. Procédé selon la revendication 6 **caractérisé en ce que** les agents mobiles se déplacent dans l'environnement citadin et ont pour objectif principal la construction d'un réseau de transport cohérent.

8. Procédé selon la revendication 6 ou 7 **caractérisé en ce que** les agents mobiles sont les messagers de la réorganisation spatiale en formulant localement la au moins une requête émise par le sous programme de supervision dans l'étape (b).

9. Procédé selon l'une des revendications 6 à 8 **caractérisé en ce que** les agents mobiles peuvent interagir directement avec le sous programme de supervision, de préférence en émettant des propositions.

10. Procédé selon l'une des revendications 6 à 9 **caractérisé en ce que** les agents mobiles sont une interface entre le sous programme de supervision et le sous programme de réorganisation.

11. Procédé selon la revendication 6 **caractérisé en ce que** les agents statiques sont des agents en trois dimensions capables de négocier entre eux.

12. Procédé selon la revendication 11 **caractérisé en ce que** chaque agent en trois dimensions a au moins un objectif personnel et sa perception se limite à son environnement proche, de préférence à l'îlot dans lequel il est situé.

13. Procédé selon la revendication 11 ou 12 **caractérisé en ce que** la négociation entre agents trois dimensions n'intervient qu'à l'échelle de l'îlot.

14. Procédé selon la revendication 11 ou 13 **caractérisé en ce que** la négociation entre agents trois dimensions conduit le sous programme de réorganisation spatiale à émettre au moins une proposition de réalisation au sous programme de supervision, ladite proposition rendant compte des négociations locales des agents trois dimensions pour la au moins une requête émise par le sous programme de supervision pour l'évolution de l'environnement citadin.

15. Procédé selon la revendication 2 **caractérisé en ce que** la réorganisation spatiale modifie au moins une partie du relief du monde en relief sur lequel est généré l'environnement citadin.

16. Programme informatique comprenant un moyen de code de programme informatique adapté pour exécuter les étapes d'un procédé conforme à l'une des revendications 1 à 15 lorsque ledit programme est exécuté sur un ordinateur.

17. Programme informatique selon la revendication 16 mis en oeuvre sur un support lisible par un ordinateur.

18. Support pouvant être lu par un ordinateur et sur lequel est enregistré un programme conforme à la revendication 16.

EP 2 027 896 A1

SPECIFICATIONS D'ENTREE
(activités et carte d'un
monde en relief)

LOGICIEL DE SIMULATION INFORMATIQUE D'UN ENVIRONNEMENT CITADIN EN 3 DIMENSIONS

1_GENERATION D'UN ELEMENT SPATIAL

SOUS-PROGRAMME DE
SUPERVISION

7_demande de
réalisation

2_interrogation

6- proposition de
réalisation

AGENTS
MOBILES

3-Transmission de l'interrogation

8-Transmission de
la demande

AGENTS EN 3
DIMENSIONS

5_propositions
de réalisation

4-Négociation entre
agents 3 dimensions

SOUS_PROGRAMME DE REORGANISATION SPATIALE

9_REORGANISATION
SPATIALE

10-GENERATION D'UN ENVIRONNEMENT CITADIN EN
3 DIMENSIONS

FIG.1

13

FIG.2

FIG.3

FIG.4

**Office européen des brevets**

# RAPPORT DE RECHERCHE EUROPEENNE

Numéro de la demande

EP 07 29 1026

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | GEORGE KELLY, HUGH MCCABE: "A Survey of Procedural Techniques for City Generation" IRB JOURNAL, décembre 2006 (2006-12), pages 1-29, XP002469955 * abrégé; figures 30,31 * * page 20, alinéas 2,3 * * page 19, alinéa 3-5 * | 1-15 | INV. A63F13/00 ADD. G06F17/50 |
| Y | N. R. JENNINGS ET AL: "Automated Negotiation: Prospects, Methods and Challenges" GROUP DECISION AND NEGOTIATION, no. 10, 2001, pages 199-215, XP002470090 * abrégé * | 1-15 | |
| A | CHEAH WAI SHIANG ET AL: "Software Agent Negotiation Development: An Experience Report" INTELLIGENT SYSTEMS DESIGN AND APPLICATIONS, 2006. ISDA '06. SIXTH INTERNATIONAL CONFERENCE ON, IEEE, PI, octobre 2006 (2006-10), pages 881-886, XP031022968 ISBN: 0-7695-2528-8 * le document en entier * | 1 | |
| A | INGRAM R ET AL: "Building virtual cities: applying urban planning principles to the design of virtual environments" VRST'96. PROCEEDINGS OF THE ACM SYMPOSIUM ON VIRTUAL REALITY AND TECHNOLOGY ASSOC. FOR COMPUT. MACHINERY NEW YORK, NY, USA, 1996, pages 1-12, XP002469953 ISBN: 0-89791-825-8 * le document en entier * | 1 | |

DOMAINES TECHNIQUES RECHERCHES (IPC)

G06F
A63F

-/--

Le présent rapport a été établi pour toutes les revendications

| Lieu de la recherche | Date d'achèvement de la recherche | Examinateur |
|---|---|---|
| Munich | 22 février 2008 | WELLISCH, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen**

**des brevets**

**RAPPORT DE RECHERCHE EUROPEENNE**

Numéro de la demande

EP 07 29 1026

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | B. CALL: "Random City Generator Technical Report" HAROLD B. LEE LIBRARY, INSTITUTIONAL REPOSITORY, juillet 2006 (2006-07), XP002469954 Brigham Young University * le document en entier * ----- | 1 | |
| A | KELLER J ET AL: "Toward a peer-to-peer shared virtual reality" DISTRIBUTED COMPUTING SYSTEMS WORKSHOPS, 2002. PROCEEDINGS. 22ND INTERNATIONAL CONFERENCE ON 2-5 JULY 2002, PISCATAWAY, NJ, USA,IEEE, 2 juillet 2002 (2002-07-02), pages 696-701, XP010601601 ISBN: 0-7695-1588-6 * le document en entier * ----- | 1 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 22 février 2008 | WELLISCH, J |

CATEGORIE DES DOCUMENTS CITES

X : particulièrement pertinent à lui seul
Y : particulièrement pertinent en combinaison avec un
  autre document de la même catégorie
A : arrière-plan technologique
O : divulgation non-écrite
P : document intercalaire

T : théorie ou principe à la base de l'invention
E : document de brevet antérieur, mais publié à la
  date de dépôt ou après cette date
D : cité dans la demande
L : cité pour d'autres raisons
.....................................................................................
& : membre de la même famille, document correspondant

EPO FORM 1503 03.82 (P04C02)